(19) Europäisches Patentamt
European Patent Office
Office européen des brevets

(11) Veröffentlichungsnummer: **0 355 596**
**A2**

# (12) EUROPÄISCHE PATENTANMELDUNG

(21) Anmeldenummer: **89114782.9**

(22) Anmeldetag: **10.08.89**

(51) Int. Cl.4: **C08L 67/02 , C08L 69/00 , //(C08L67/02,69:00,51:04), (C08L69/00,67:02,51:04)**

(30) Priorität: **13.08.88 DE 3827568**

(43) Veröffentlichungstag der Anmeldung: **28.02.90 Patentblatt 90/09**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Lausberg, Dietrich, Dr.**
**Nachtigalstrasse 32 a**
**D-6700 Ludwigshafen(DE)**
Erfinder: **Vietmeier, Juergen, Dr.**
**Waldstrasse 112**
**D-6706 Wachenheim(DE)**
Erfinder: **McKee, Graham Edmund, Dr.**
**Kastanienweg 8**
**D-6940 Weinheim(DE)**
Erfinder: **Braun, Hans-Georg, Dr.**
**Weinbergerstrasse 6**
**D-6718 Gruenstadt(DE)**
Erfinder: **Hildenbrand, Peter, Dr.**
**Heinrich-Heine-Ring 23**
**D-7500 Karlsruhe 51(DE)**

## (54) Kälteschlagzähe thermoplastische Polyesterformmassen.

(57) Thermoplastische Polyesterformmasse, im wesentlichen enthaltend

(A) 20 bis 89 Gew.% mindestens eines aliphatischen Polyesters einer aromatischen Dicarbonsäure

(B) 10 bis 79 Gew.% mindestens eines aromatischen Polycarbonats

(C) 1 bis 40 Gew.% eines Elastomeren oder einer Mischung von Elastomeren aus

CA 5 bis 100 Gew.% eines kautschukelastischen Pfropfpolymerisats, aufgebaut aus

CA1 mindestens 50 Gew.% einer Pfropfgrundlage mit einer Glasübergangstemperatur $T_g$ unter -20 °C und

CA2 5 bis 20 Gew.% einer 1. Pfropfhülle bestehend aus einem Gemisch aus $C_1$-$C_8$-Akylestern der Acrylsäure und Vinylaromaten im Gewichtsverhältnis 5:95 bis 70:30 und

CA3 10 bis 30 Gew.% einer 2. Pfropfhülle aus mindestens einem Polymeren mit einer Glasübergangstemperatur $T_g$ über 20 °C und

CB 0 bis 95 Gew.% eines Ethylencopolymeren aufgebaut aus CB1 40 bis 99 Gew.% Ethylen und CB2 1 bis 60 Gew.% mindestens eines Carboxylgruppen und/oder Carboxylgruppenderivate enthaltenden Comonomeren und wobei die Summe von A bis C, CA und CB, CA1 bis CA3 sowie von CB1 und CB2 jeweils 100 Gew.% beträgt.

EP 0 355 596 A2

# Kälteschlagzähe thermoplastische Polyesterformmassen

Gegenstand der Erfindung sind kälteschlagzähe thermoplastische Polyesterformmassen, die neben einer guten Kälteschlagzähigkeit eine sehr gute Lochkerbschlagzähigkeit bei tiefen Temperaturen aufweisen und sich durch eine hohe Wärmeformbeständigkeit auszeichnen.

Polymermischungen aus thermoplastischen Polyestern und Polycarbonat sind aus der DE-A-24 17 002 bekannt. Sie weisen gegenüber den reinen Polyestern ein verbessertes mechanisches Niveau auf. Es wurde auch bereits versucht, die Schlagzähigkeit von Polyester/Polycarbonatmischungen durch Zusatz von Elastomeren zu verbessern. Geeignete Modifizierungsmittel sind entsprechend DE-PS 2 343 609 Pfropfcopolymere auf Basis Polybutadien.

In der EP-A-135 779 werden Pfropfcopolymere mit Kern-Hülle-Aufbau beschrieben, deren Kern im wesentlichen aus Polybutadien und dessen 1. Hülle aus Vinylmonomeren wie Styrol oder Acrylnitril und dessen 2. Hülle aus (Meth)Acrylaten zusammen mit einem Vernetzer besteht.

Diese Kautschuke verleihen den daraus hergestellten Formmassen eine gute Zähigkeit bei Temperaturen oberhalb 0 °C, jedoch sind die Tieftemperaturzähigkeit und Reißdehnung noch nicht voll zufriedenstellend.

Es war deshalb die technische Aufgabe gestellt, schlagzähe thermoplastische Polyesterformmassen zur Verfügung zu stellen, die sich durch gute mechanische Eigenschaften auszeichnen und gleichzeitig eine gute Kerbschlagzähigkeit bei tiefer Temperatur sowie eine hohe Reißdehnung aufweisen.

Diese Aufgabe wird gelöst durch kälteschlagzähe, thermoplastische Polyesterformmassen enthaltend im wesentliche Komponenten

(A) 20 bis 89, vorzugsweise 30 bis 77 und insbesondere 35 bis 75 Gew.-% mindestens eines aliphatischen Polyesters einer aromatischen Dicarbonsäure

(B) 10 bis 79, vorzugsweise 20 bis 67 und insbesondere 20 bis 60 Gew.% mindestens eines aromatischen Polycarbonats

(C) 1 bis 40, vorzugsweis 3 bis 30 und insbesondere 5 bis 25 Gew.% mindestens eines Elastomeren oder einer Mischung von Elastomeren aus

CA 5 bis 100 Gew.% bezogen auf CA + CB eines kautschukelastischen Pfropfpolymerisats, aufgebaut aus

CA1 mindestens 50 Gew.% einer Pfropfgrundlage mit einer Glasübergangstemperatur $T_g$ von weniger als -20 °C und

CA2 5 bis 20 Gew.% einer 1. Pfropfhülle bestehend aus einem Gemisch aus $C_1$-$C_8$-Alkylester der Acrylsäure und einem Vinylaromaten im Gewichtsverhältnis 5:95 bis 70:30 und

CA3 10 bis 30 Gew.% einer 2. Pfropfhülle aus mindestens einem Polymeren mit einer Glasübergangstemperatur $T_g > 20$ °C und

CB 0 bis 95 Gew.% eines Ethylencopolymeren aufgebaut aus

a) 40 bis 99 Gew.% Ethylen und

b) 1 bis 60 Gew.% mindestens eines Carboxylgruppen und/oder Carboxylgruppenderivate enthaltenden Comonomeren und wobei die Summe von A bis C 100 Gew.% beträgt.

Die neuen schlagzähen thermoplastischen Polyesterformmassen zeichnen sich durch ein gutes mechanisches Niveau insbesondere gute Kerbschlagzähigkeiten bei tiefen Temperaturen und hohen Reißdehnungen in Kombination mit hoher Wärmeformbeständigkeit und guter Eigenfarbe aus.

Die entsprechend der Erfindung verwendeten Polyester (Komponente A) sind an sich bekannt. Sie besitzen Ketteneinheiten, die einen eventuell substituierten aromatischen Ring in der Polymerkette enthalten. Beispiele für derartige Substituenten des aromatischen Rings sind Halogene, wie Chlor oder Brom, $C_1$- bis $C_4$-Alkylgruppen, wie Methyl-, Ethyl-, Propyl- oder Butylgruppen.

Geeignete Polyester können beispielsweise durch Umsetzung von aromatischen Dicarbonsäuren, deren Estern oder deren esterbildender Derivate mit Dihydroxyverbindungen in an sich bekannter Weise hergestellt werden.

Als Beispiele für aromatische Dicarbonsäuren seien Naphthalindicarbonsäuren, Terephthalsäure und Isophthalsäure oder deren Mischungen genannt. Die aromatischen Dicarbonsäuren oder deren Derivate können teilweise, bevorzugt zu nicht mehr als 10 Mol%, durch andere Dicarbonsäuren ersetzt werden. Hier seien beispielhaft aliphatische oder cycloaliphatische Dicarbonsäuren wie Adipinsäure, Azelainsäure, Sebacinsäure und Cyclohexandicarbonsäure oder deren Mischungen genannt.

Als Dihydroxyverbindungen werden bevorzugt Glykole mit 2 - 6 C-Atomen, insbesondere Ethylenglykol, Butandiol-1,4, But-2-endiol-1,4, Hexandiol-1,6, Hexandiol-1,4, Cyclohexandiol-1,4, 1,4-Di(hydroxymethyl)-cyclohexan, 2,2-Di(4′-hydroxyphenyl)propan und Neopentylglykol oder deren Mischungen eingesetzt.

Bevorzugte Polyester sind Polyalkylenterephthalate, die sich von Alkandiolen mit 2 - 6 C-Atomen ableiten. Besonders bevorzugt sind Polyethylenterephthalat und Polybutylenterephthalat.

Die relative Viskosität der Polyester liegt im allgemeinen im Bereich von 1,2 bis 1,8, gemessen in 0,5 gew%iger Lösung in einem Phenol/o-Dichlorbenzol-Gemisch (Gewichtsverhältnis 3 : 2) bei 25° C.

Die erfindungsgemäß verwendeten aromatischen Polycarbonate (Komponente B) sind an sich ebenfalls bekannt. Sie sind z.B. entsprechend dem Verfahren nach der deutschen Patentschrift 1 300 266 durch Grenzflächenpolykondensation oder gemäß dem Verfahren der deutschen Offenlegungsschrift 1 495 730 durch Umesterung von Diphenylcarbonat mit Bisphenol A erhältlich. Bisphenol A kann bis zu 30 Mol.-% durch andere aromatische Bis-hydroxy-verbindungen ersetzt werden, insbesondere Bis-(4-hydroxyphenyl)-pentan-2,2, 2,6-Dihydroxynaphthalin, Bis-(4-hydroxyphenyl)-sulfon, Bis-(4-hydroxyphenyl)-ether, Bis-(4-hydroxyphenyl)-sulfid, Bis-(4-hydroxyphenyl)-methan, Bis-(4-hydroxyphenyl)-ethan-1,1 oder 4,4′-Dihydroxydiphenyl.

Für den erfindungsgemäßen Zweck geeignete Polycarbonate haben im allgemeinen eine relative Viskosität (gemessen bei 25° C an einer 0,5 gew.%igen Methylenchloridlösung) von vorzugsweise 1,2 bis 1,5, insbesondere von 1,28 bis 1,40.

Als Komponente C enthalten die erfindungsgemäßen Formmassen 1 bis 40, vorzugsweise 3 bis 30 und insbesondere 5 bis 25 Gew.-% eines Elastomeren oder einer Mischung von Elastomeren aus 5 bis 100, vorzugsweise 20 bis 90 und insbesondere 30 bis 80 Gew.-% eines kautschukelastischen Pfropfpolymerisats aus

CA1) mindestens 50, vorzugsweise 50 bis 80 Gew.% einer Pfropfgrundlage mit einer Glasübergangstemperatur $T_g$ von weniger als -20° C,

CA2) 5 bis 20, vorzugsweise 7 bis 18 und insbesondere 8 bis 15 Gew.% einer 1. Pfropfhülle bestehend aus einem Gemisch aus $C_1$-$C_8$-Alkylestern der Acrylsäure und einem Vinylaromaten im Gewichtsverhältnis 5:95 bis 70:30 und

CA3) 10 bis 30, vorzugsweise 12 bis 28 und insbesondere 14 bis 25 Gew.% einer 2. Pfropfhülle aus mindestens einem Polymerisat mit einer Glasübergangstemperatur $T_g$ von mehr als 20° C. Vorzugsweise liegt die Glasübergangstemperatur der Pfropfpolymerisate CA im Bereich von -150 bis -21 ° C.

Beispiele für solche Pfropfpolymerisate sind Systeme auf Basis von Polybutadien oder Systeme auf Basis von Estern der Acrylsäure und/oder Methacrylsäure. Besonders geeignet sind Pfropfcopolymere, die einen Kern auf Basis Polybutadien haben.

Die Pfropfpolymerisate werden vorzugsweise auf bekannte Weise durch Emulsionspolymerisation hergestellt, wie sie z.B. in Houben-Weyl, Methoden der organischen Chemie, Band XIV/1, 1961, Seiten 396 bis 399 beschrieben ist.

Im Falle der Verwendung von Acrylat- oder Methacrylatkautschuke können neben (Meth)acrylaten bis zu 40 Gew.% weiterer Comonomerer enthalten sein. Die $C_1$-$C_8$-Alkylester der Acrylsäure bzw. Methacrylsäure sowie deren halogenierte Derivate wie auch aromatische Acrylsäureester und deren Mischungen werden als Ester der (Meth)acrylsäure bevorzugt. Als Comonomere in der Pfropfgrundlage seien Acrylnitril, Methacrylnitril, Styrol, α-Methylstyrol, Acrylamide, Methacrylamide sowie Vinyl-$C_1$-$C_8$-Alkylether angeführt.

Die Pfropfgrundlage kann unvernetzt oder teilweise oder vollständig vernetzt sein. Die Vernetzung wird durch Copolymerisation von vorzugsweise 0,02 bis 5 Gew.% insbesondere 0,05 bis 2 Gew.%eines vernetzenden Monomeren mit mehr als einer Doppelbindung erzielt. Geeignete vernetzende Monomere werden z.B. in der DE-A-27 26 256, der DE-A-24 44 584 und der EP-A-50 265 beschrieben.

Bevorzugte vernetzende Monomere sind Triallylcyanurat, Triallylisocyanurat, Triacryloylhexahydro-s-triazin und Trialkylbenzole sowie Dihydrodicyclopentadienylacrylat.

Falls die vernetzenden Monomeren mehr als 2 polymerisierbare Doppelbindungen aufweisen, ist es vorteilhaft, ihre Menge auf nicht mehr als 1 Gew.% bezogen auf die Pfropfgrundlage, zu beschränken.

Bevorzugt als Pfropfgrundlage werden Polymerisate auf Butadienbasis.

Neben Butadien können auch bis zu 20 Gew.%andere Monomere in die Pfropfgrundlage eingebaut werden. Beispiele hierfür sind Styrol, Acrylnitril, Ester der Acryl- oder Methacrylsäure mit $C_1$-$C_8$-Alkanolen, ferner Diene wie Isopren, Chloropren oder andere mit Butadien copolymerisierbare Vinylverbindungen. Vorteilhaft ist die Pfropfgrundlage somit zu mindestens 80 Gew.% aus Polybutadieneinheiten aufgebaut.

Besonders bevorzugte Pfropfgrundlagen sind Emulsionspolymerisate mit einem Gelgehalt von mindestens 50, insbesondere mindestens 60 Gew.% (bestimmt in Dimethylformamid bei 25° C nach M. Hoffmann, H. Krömer, R. Kuhn, Polymeranalytik, Georg-Thieme-Verlag, Stuttgart, 1977).

Auf diese Pfropfgrundlage erfolgt das Aufpfropfen einer 1. Hülle, die neben einem vinylaromatischen Monomer, wie z.B. Styrol, α-Methylstyrol oder p-Methylstyrol auch $C_1$-$C_8$-Alkylester der Acrylsäure im Verhältnis 95:5 bis 30:70 enthält. Bevorzugt ist der Bereich 92:8 bis 50:50, besonders bevorzugt 90:10 bis 60:40.

Bevorzugte $C_1$-$C_8$-Alkylester der Acrylsäure sind Ethyl-, n-Butyl- und 2-Ethylhexylacrylat, besonders bevorzugt Ethylacrylat.

Diese 1. Hülle kann mit üblichen Vernetzern vernetzt werden. Der Anteil der 1. Hülle beträgt 5 bis 20 Gew.%, bevorzugt 7 bis 18 %, besonders bevorzugt 8 bis 15 Gew.% an CA.

Auf diese 1. Pfropfhülle erfolgt das Aufpfropfen einer 2. Hülle aus mindestens einem Polymeren mit einer Glasübergangstemperatur $Tg > 20^\circ C$.

Als Monomere für den Aufbau der Pfropfhülle eignen sich vorzugsweise Mischungen von Styrol/Acrylnitril im Gewichtsverhältnis 3,5:0,5 bis 2,5:1,5, ferner Methyl(meth)acrylat und Mischungen derselben. In der Pfropfhülle können auch geringe Mengen, z.B. bis zu 30 Gew.%, bezogen auf die Summe der Pfropfmonomeren, andere Monomeren eingebaut werden, wie Acrylsäureester von $C_1$-$C_{10}$-Alkanolen, Methacrylsäureester von $C_2$-$C_{10}$-Alkanolen, Vinylderivate mit reaktiven Gruppen wie Allyl(meth)acrylat, Maleinsäureanhydrid, Itaconsäure oder Glycidylmethacrylat.

Die Teilchen des Pfropfpolymerisats haben vorteilhaft einen mittleren Durchmesser von 0,05 bis 0,6 µm, ermittelt durch Ultrazentrifugation.

Bei den angegebenen mittleren Teilchengrößen handelt es sich in allen Fällen um das Gewichtsmittel der Teilchengröße, wie sie mittels einer analytischen Ultrazentrifuge entsprechend der Methode von W. Scholtan und M. Lange, Kolloid-Z. und z.-Polymere, 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.% der Teilchen einen gleichen oder kleineren Durchmesser haben als der Durchmesser, der dem $d_{50}$-Wert entspricht.

Bevorzugte Copolymere CB sind kautschukelastische Ethylencopolymere mit (Meth)acrylsäureestern. Besonders bevorzugt sind Ethylen-(Meth)acrylsäureester-Terpolymere mit Epoxygruppen tragenden Monomeren.

Bevorzugte epoxygruppentragende Monomere sind Ether der allgemeinen Formel

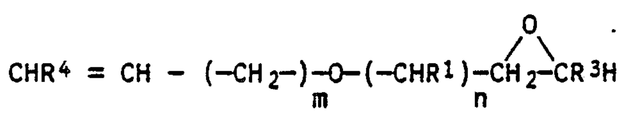

wobei m = eine ganze Zahl zwischen 0 und 20
und n = eine ganze Zahl zwischen 1 und 10
und $R^1$, $R^2$, $R^3$, $R^4$ jeweils ein Wasserstoffatom oder eine Alkylgruppe mit 1 bis 6 C-Atomen, vorzugsweise Methyl-, Ethyl- oder n-Propyl ist.

Bevorzugt ist m = 0 oder 1,
n = 1
und $R^1$, $R^2$, $R^3$ = H, wie Alkylglycidylether oder Vinylglycidylether.

Weitere epoxygruppentragende Monomere sind epoxygruppentragende Olefine der allgemeinen Formel

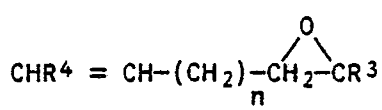

wobei m, $R^2$, $R^3$ und $R^4$ die gleiche Bedeutung hat wie oben, bevorzugt ist m = 0 bis 5, $R^4$ = H oder Methyl, $R^2$ und $R^3$ = H oder Methyl und Ethyl.

Besonders bevorzugt sind Epoxygruppen tragende Ester der Acrylsäure oder Methacrylsäure. Besondere technische Bedeutung haben Glycidylacrylat bzw. Glycidylmethacrylat erlangt.

Bevorzugte Olefinpolymere enthalten

a) 50 bis 99 Gew.% Olefin, vorzugsweise Ethylen
b) 1 bis 50 Gew.% Glycidylacrylat und/oder Glycidylmethacrylat und gegebenenfalls
c) 0 bis 49 Gew.% mindestens eines anderen, copolymerisierbaren Monomeren.

Die Glasübergangstemperatur des Olefinpolymeren liegt vorzugsweise unter $0^\circ C$, besonders bevorzugt unter $-20^\circ C$. Bevorzugte copolymerisierbare Monomere sind (Meth)acrylate, Vinylester, Vinylether und Methylbutenol. Beispielhaft seien genannt Methyl(meth)acrylat, Ethyl-(meth)acrylat, Propyl-(meth)acrylate, Butyl-(meth)acrylate, besonders bevorzugt sind n-Butylacrylat und 2-Ethylhexylacrylat.

Besonders bevorzugte Olefinpolymerisate enthalten:

a) 50 bis 98 Gew.% Ethylen

b) 1 bis 40 Gew.% Glycidyl(meth)acrylat und

c) 1 bis 45 Gew.% n-Butylacrylat und/oder 2-Ethylhexylacrylat, besonders bewährt haben sich Olefinpolymerisate aus

a) 60 bis 95 Gew.% Ethylen

b) 3 bis 20 Gew.% Glycidyl(meth)acrylat

c) 10 bis 35 Gew.% n-Butylacrylat und/oder 2-Ethylhexyacrylat.

Der Anteil der Polymeren CB an der Komponente C beträgt 0 bis 95, vorzugsweise 10 bis 80 und insbesondere 20 bis 70 Gew.-%, bezogen auf das Gesamtgewicht der Komponente C.

Die Olefinpolymeren können durch beliebige Methoden polymerisiert werden, wie statistische Copolymerisation, Blockcopolymerisation und Pfropfcopolymerisation.

Bevorzugt ist die statistische Copolymerisation unter hohem Druck und bei erhöhter Temperatur. Die Polymere CB sind im allgemeinen hochmolekular und haben einen Schmelzindex (MFI 190/2,16, DIN 53 735) von 1 bis 80.

Neben den wesentlichen Komponenten A) bis C) können die erfindungsgemäßen Formmassen übliche Zusatzstoffe und Verarbeitungshilfsmittel enthalten.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden wie Halogenide von Metallen der Gruppe 1 des periodischen Systems, z..B. Natrium-, Kalium-, Lithiumhalogenide in Verbindung mit Kupfer-(I)-halogeniden, z.B. Chlorid, Bromid oder Iodid. Ferner sind geeignete Sabilisatoren, sterisch gehinderte Phenole, Hydrochinone, verschiedene substituierte Vertreter dieser Gruppe und Kombinationen derselben in Konzentrationen bis 1 Gew.% bezogen auf das Gewicht der Mischung.

Als UV-Stabilisatoren kann man ebenfalls diejenigen, die allgemein zu Polymeren zugesetzt werden, in Mengen bis zu 2,0 Gew.% bezogen auf die Mischung verwenden. Beispiele für UV-Stabilisatoren sind verschiedene substituierte Resorcine, Salicylate, Benzotriazole, Benzophenone und dergleichen.

Geeignete Gleit- und Entformungsmittel, die z.B. in Mengen bis zu 1 Gew.% der thermoplastischen Masse zugesetzt werden, sind Stearylalkohol und Fettsäureester wie Stearinsäureester. Ferner können zugesetzt werden organische Farbstoffe, wie Nigrosin, Pigmente, z.B. Titandioxid, Cadmiumsulfid, Cadmiumsulfid-selenid, Phthalocyanine, Ultramainblau oder Ruß.

Darüber hinaus können die erfindungsgemäßen Formmasssen faser- und pulverförmige Füllstoffe und Verstärkungsmittel, wie Kohlenstoffasern, Glasfaser, amorphe Kieselsäure, Asbest, Calciumsilicat, Calciummetasilicat, Aluminiumsilicat, Magnesiumcarbonat, Kaolin, Kreide, gepulverten Quarz, Glimmer, Feldspat in Mengen bis zu 50 Gew.% bezogen auf die Formmasse, enthalten. Ferner können Keimbildungsmittel, wie Talkum, Calciumfluorid, Natriumphenylphosphinat, Aluminiumoxid oder feinteiliges Polytetrafluorethylen in Mengen z.B. bis zu 5 Gew.% bezogen auf die Masse angewandt werden. Weichmacher, wie Phthalsäuredioctylester, Phthalsäuredibenzylester, Phthalsäurebutylbenzylester, Kohlenwasserstofföle, N-(n-Butyl)-benzolsulfonamid, o- und p-Toluolethylsulfonamid werden vorteilhaft in Mengen bis etwa 20 Gew.% bezogen auf die Formmasse, zugesetzt. Färbemittel, wie Farbstoffe und Pigmente können in Mengen bis zu etwa 5 Gew.%, bezogen auf die Formmasse, zugesetzt werden.

Die Formmassen gemäß der Erfindung werden z.B. hergestellt, in dem man die Komponente A bis C in einer üblichen Mischvorrichtung wie Schneckenextruder, Brabender-Mühle oder Banbury-Mühle mischt und extrudiert.

Nach einer bevorzugten Arbeitsweise werden Polyester, Polycarbonat, Pfropfkautschuk und ggf. Ethylencopolymere und Zuschläge abgemischt und auf einem Zweiwellenextruder extrudiert.

Die erfindungsgemäßen Formmassen eignen sich zur Herstellung von hochbeanspruchbaren thermostabilen schlagzähen Formteilen für technische Zwecke aller Art nach dem Spritzguß- oder Extrusions- und Extrusionsblasverfahren.

## Beispiele

Zunächst wurde Polybutylenterephthalat (PBT) mit einem Polycarbonat (PC) und den Schlagzähmodifiern intensiv gemischt, in einem Zweischneckenextruder vom Typ ZSK 30 der Firma Werner und Pfleiderer, bei 250 °C aufgeschmolzen, homogenisiert und in ein Wasserbad extrudiert. Nach Granulierung und Trocknung wurden auf einer Spritzgußmaschine Prüfkörper geformt und diese ohne weitere Nachbehandlung geprüft.

Das eingesetzte Polybutylenterephtalat hatte eine relative Viskosität von 1,60 gemessen in einer 0,5

%igen Lösung in Phenol-o-Dichlorbenzol (Gew.-Verh. 1:1) bei 25° C .

Das verwendete Polycarbonat auf Bisphenol A-Basis hatte eine relative Viskosität von 1,36 gemessen in einer 0,5 %igen Lösung in Methylenchlorid bei 25° C .

Die folgenden Kautschuke werden eingesetzt

Bei der Beschreibung der Kautschuke beziehen sich die Prozent- und Verhältnisangaben stets auf das Gewicht, falls nicht anders angegeben.

Latex 1:

Ein wäßriger Polybutadienlatex mit einem $d_{50}$-Wert von 90 nm und einem Feststoffgehalt von 42 %

Latex 2:

Ein wäßriger n-Butylacrylatlatex mit einem $d_{50}$-Wert von 350 nm, einem Feststoffgehalt von 40 %, vernetzt mit 0,8 % Dihydrodicyclopentadienylacrylat

CA/1 70 % Latex 1 gepfropft in der 1. Stufe mit Styrol/Ethylacrylat im 9:1 (10 %) und in der 2. Stufe mit Methylmethacrylat/Glycidylmethacrylat (MMA/GMA) 19:1 (20 %), mit einem $d_{50}$ von 110 nm und einem Gelgehalt (in Toluol) von 89 Gew.-%

CA/2 wie CA/1 aber in der 1. Stufe Styrol/Ethylacrylat 7:3 (10 %) mit einem $d_{50}$ von 110 nm und einem Gelgehalt von 90 %

CA/3 wie CA/1 aber in der 1. Stufe Styrol/Ethylacrylat im Gew.-Verh. 5:5 (10 %) mit einem $d_{50}$ von 110 nm und einem Gelgehalt von 92 %

CA/4 wie CA/1 aber in der 1. Stufe Styrol/n-Butylacrylat 8:2 und einem $d_{50}$ von 110 nm und einem Gelgehalt von 90 %

CA/5 wie CA/1 aber in der 1. Stufe Styrol/2-Ethylhexylacrylat 9:1 mit einem $d_{50}$ von 110 nm und einem Gelgehalt von 88 %

CA/6 Latex 2 gepfropft in der 1. Stufe mit Styrol/Ethylacrylat 8:2 (10 %) und in der 2. Stufe mit MMA/GMA 19: 1 (20 %) mit einem $d_{50}$ von 410 nm und einem Gelgehalt von 79 %

CA/7 wie CA/6 aber in der 1. Stufe Styrol/Ethylacrylat/Dihydrodicyclopentadienylacrylat 78:20:2 (10 %) mit einem $d_{50}$ von 400 nm und einem Gelgehalt von86 %

CA/V1 (Vergl.) wie CA/1 nur in der 1. Stufe 100 % Styrol (10 % Gewichtsanteil) mit einem $d_{50}$ von 110 nm und einem Gelgehalt von 88 %

CA/V2 (Vergl.) wie CA/6 aber in der 1. Stufe 100 % Styrol (10 % Gewichtsanteil) mit einem $d_{50}$ von 430 nm und einem Gelgehalt von 78 %

CA/V3 (Vergl.) Paraloid® KM 6 53 (Rohm u. Haas)

Kern Polybutadien/Styrol 9/1 (70 %)

1. Hülle Styrol (10 %)

2. Hülle MMA (20 %)

$d_{50}$ 120 nm, Gelgehalt 95 %

CB Ethylenterpolymeres aus Ethylen, N-Butylacrylat und Glycidylmethacrylat (67/30/3) mit einem MFI von 10 g/10 min. (190° C/2,16 kp)

Die Zusammensetzung der Produkte und die Ergebnisse zeigt Tabelle 1.

Tabelle 1

| Nr. | | Komponente Pfropfpolymerisat (Gew.-%) | | | Ethylencopolymer CB | Kerbschlagzähigkeit (nach DIN 53 453) | | Reißdehnung (DIN 53 455) $\epsilon_R$ [%] | Wärmeformbeständigkeit Vicat B [%] |
|---|---|---|---|---|---|---|---|---|---|
| | B | A | | CA | | $a_k$-20 °C [kJ/m²] | $a_k$-40 °C [kS/m²] | | |
| 1 | 50 | 40 | 10 | CA/1 | - | 32 | 17 | 160 | 128 |
| 2 | 50 | 40 | 10 | CA/2 | - | 30 | 16 | 150 | 127 |
| 3 | 50 | 40 | 10 | CA/3 | - | 28 | 14 | 150 | 127 |
| 4 | 50 | 40 | 10 | CA/4 | - | 29 | 15 | 150 | 127 |
| 5 | 50 | 40 | 10 | CA/5 | - | 31 | 17 | 160 | 126 |
| 6 | 50 | 40 | 10 | CA/6 | - | 15 | 7 | 150 | 128 |
| 7 | 50 | 40 | 10 | CA/7 | - | 15 | 6 | 160 | 128 |
| 8* | 50 | 40 | 10 | CA/V1 | - | 23 | 12 | 100 | 125 |
| 9* | 50 | 40 | 10 | CA/V2 | - | 11 | 5 | 110 | 126 |
| 10* | 50 | 40 | 10 | CA/V3 | - | 20 | 12 | 120 | 117 |
| 11 | 15 | 65 | 10 | CA/1 | 10 | 24 | 15 | 120 | 122 |
| 12 | 15 | 65 | 10 | CA/5 | 10 | 23 | 16 | 110 | 121 |
| 13* | 15 | 65 | 10 | CA/V1 | 10 | 15 | 10 | 100 | 118 |

**Ansprüche**

1. Thermoplastische Polyesterformmasse, im wesentlichen enthaltend
(A) 20 bis 89 Gew.% mindestens eines aliphatischen Polyesters einer aromatischen Dicarbonsäure
(B) 10 bis 79 Gew.% mindestens eines aromatischen Polycarbonats
(C) 1 bis 40 Gew.% eines Elastomeren oder einer Mischung von Elastomeren aus
CA 5 bis 100 Gew.% eines kautschukelastischen Pfropfpolymerisats, aufgebaut aus
CA1 mindestens 50 Gew.% einer Pfropfgrundlage mit einer Glasübergangstemperatur Tg unter -20° C und
CA2 5 bis 20 Gew.% einer 1. Pfropfhülle bestehend aus einem Gemisch aus $C_1$-$C_8$-Akylestern der Acrylsäure und Vinylaromaten im Gewichtsverhältnis 5:95 bis 70:30 und
CA3 10 bis 30 Gew.% einer 2. Pfropfhülle aus mindestens einem Polymeren mit einer Glasübergangstemperatur Tg über 20° C und
CB 0 bis 95 Gew.% eines Ethylencopolymeren aufgebaut aus
CB1 40 bis 99 Gew.% Ethylen und
CB2 1 bis 60 Gew.% mindestens eines Carboxylgruppen und/oder Carboxylgruppenderivate enthaltenden Comonomeren und
wobei die Summe von A bis C, CA und CB, CA1 bis CA3 sowie von CB1 und CB2 jeweils 100 Gew.% beträgt.

2. Thermoplastische Polyesterformmasse nach Anspruch 1, wobei die Pfropfgrundlage CA/1 einen Gelgehalt von mindestens 50 Gew.-% aufweist.

3. Verwendung der Masse nach einem der Ansprüche 1 bis 2 zur Herstellung von Formteilen im Spritzguß-, Extrusions- oder Extrusionsblasverfahren.